# EUROPÄISCHE PATENTANMELDUNG

(11) **EP 1 903 488 A1**
(43) Veröffentlichungstag der Anmeldung: **26.03.2008**
(21) Anmeldenummer: 06090175.8
(22) Anmeldetag: 21.09.2006
(51) Int. Cl.: G06Q 20/00, H04L 29/08, H04L 12/14

(54) **Verfahren zum Betreiben eines Kommunikationssystems und zum Übermitteln von paketorientierten Daten von und/oder zu einem Kommunikationsendgerät, Filtereinrichtung und Netzknoten**

(71) Anmelder: Nokia Siemens Networks GmbH & Co. KG, 81541 München (DE)
(72) Erfinder: Andersen, Frank-Uwe, 10625 Berlin (DE); Schläger, Morten, Dr., 14050 Berlin (DE); Kühne, Ralph, 71679 Asperg (DE)

(57) **Zusammenfassung**

Die Erfindung betrifft ein flexibles und nutzerfreundliches Verfahren zum Betreiben eines Kommunikationssystems und zum Übermitteln von paketorientierten Daten von und/oder zu einem Kommunikationsendgerät (KEG) mit den folgenden Schritten:
- Untersuchen der von dem Kommunikationsendgerät (KEG) gesendeten und/oder für das Kommunikationsendgerät (KEG) bestimmten Daten und Feststellen eines gegenüber einer üblichen Nutzung auffälligen Nutzungsmusters durch das Kommunikationssystem,
- Erzeugen eines Kosten-Signals, das eine Angabe zu den für das Kommunikationsendgerät (KEG) durch das festgestellte Nutzungsmuster verursachten Gebühren enthält, durch das Kommunikationssystem,
- Senden einer Anfragenachricht (REQ) mit dem Kosten-Signal von dem Kommunikationssystem an das Kommunikationsendgerät (KEG) und
- Fortsetzen des Übermittelns der Daten durch das Kommunikationssystem, sofern seitens des Kommunikationsendgerätes (KEG) ein Kosten-Bestätigungs-Signal erzeugt und in einer Antwortnachricht (ANS) an das Kommunikationssystem übertragen wird.

## Beschreibung

Im Zusammenhang mit der Übermittlung von paketorientierten Daten in einem Kommunikationssystem besteht ein grundlegendes Problem darin, dass weder für ein Kommunikationsendgerät, von und/oder zu dem die Daten übermittelt werden, noch seitens des zur Datenübertragung genutzten Kommunikationssystems in allen auftretenden Fällen zuverlässig zwischen einer üblichen und einer missbräuchlichen Nutzung unterschieden werden kann. Seitens des Kommunikationssystems gilt dies beispielsweise sowohl für Anwendungsserver innerhalb des Kommunikationssystems als auch für sonstige in dem Kommunikationssystem angeordnete Netzknoten. Bei solchen Netzknoten kann es sich beispielsweise um so genannte Gateways oder Router handeln, über die Daten von und/oder zu dem Kommunikationsendgerät übertragen werden.

Das beschriebene Problem hat beispielsweise zur Folge, dass die Grenzbereiche zwischen einer intensiven Nutzung eines Dienstes und so genannten "Denial-Of-Service"-Attacken, welche das Ziel verfolgen, einen Anwendungsserver oder einen anderen Netzknoten durch eine Vielzahl von Anfragen und die damit verbundene Überlastsituation von der Erbringung seiner Funktion abzuhalten, nicht immer zuverlässig unterschieden werden können. Gleiches gilt hinsichtlich einer Unterscheidung zwischen einer üblichen privaten und einer kommerziellen Nutzung eines Dienstes.

Zur Erkennung und Abwehr von Angriffen auf Kommunikationssysteme, z. B. in Form von "Denial-Of-Service"-Angriffen oder anderen Arten von so genannten "Hacker"-Angriffen ("Intrusion Detection") sind auf so genannten Nutzungsmustern beruhende Verfahren bekannt. Als Beispiele für bekannte Verfahren zur Klassifizierung und Erkennung von Nutzungsmustern sei auf die Dokumente "Agent-based Network Intrusion Detection System Using Data Mining Approaches", Cheung-Leung Lui, Tak-Chung Fu und Ting-Yee Cheung, Proceedings of the Third International Conference on Information Technology and Applications (ICITA'05), IEEE 2005, "A Stateful Intrusion Detection System for World-Wide Web Servers, Giovanni Vigna, Willam Robertson, Vishal Kher und Richard A. Kemmerer, Proceedings of the 19th Annual Computer Security Applications Conference (ACSAC 2003), IEEE 2003, "Beyond the Perimeter: the Need for Early Detection of Denial of Service Attacks", John Haggerty, Qi Shi und Madjid Merabti, Proceedings of the 18th Annual Computer Security Applications Conference (ACSAC'02), IEEE 2002 und "A Scientific Approach to Cyberattack Detection, Nong Ye und Toni Farley, IEEE Computer Society November 2005, verwiesen.

Nutzungsmuster der zuvor beschriebenen Art werden teilweise von Betreibern von Kommunikationssystemen dazu verwendet, um Nutzer beziehungsweise Nutzergruppen von der Nutzung eines Dienstes auszuschließen, wenn das betreffende Nutzungsmuster auf eine übermäßige oder gewerblich orientierte Nutzung hinweist. So ist beispielsweise bekannt, dass es Internet Service Provider gibt, die ihren Flat-Rate-Kunden den Vertrag kündigen, wenn die Menge der von diesen Nutzern übertragenen Daten über einen längeren Zeitraum nicht mehr innerhalb des aufgrund des angewendeten Preismodells für den Netzbetreiber des Kommunikationssystems lukrativen Bereichs liegt. Weitere Beispiele für den Ausschluss von Benutzern von Diensten anhand von Nutzungsmustern sind solche, bei denen Dienstanbieter ohne entsprechende Kompensation die Dienste anderer, vorgelagerter Anbieter in ihre eigenen Dienste integrieren. Ein Beispiel hierfür ist etwa die Einbettung eines elektronischen Stadtplandienstes in andere Dienste, d.h. beispielsweise die Verwendung eines Stadtplandienstes eines fremden Anbieters zur Angabe von Anfahrtsskizzen für einen Dienst mit Restauranttipps.

Darüber hinaus kann die Anforderung bestehen, dass bestimmte Dienste nur von Privatpersonen frei genutzt werden können, nicht aber im gewerblichen oder professionellen Umfeld. So gibt es Dienste, die auf Anfragen beispielsweise aus dem Adressbereich bestimmter Firmen nicht erbracht werden, da die betreffenden Firmen nicht bereit waren, ein entsprechendes Entgelt an den Dienstanbieter zu bezahlen.

Bei der Verwendung von Nutzungsmustern ist zu beachten, dass in bestimmten Fällen gegenüber einer üblichen Nutzung auffällige Nutzungsmuster durch den jeweiligen Nutzer bewusst zu einem bestimmten Zweck erzeugt werden. Dies betrifft beispielsweise die massierte Verwendung von Anfragen an eine Suchmaschine zur Plagiatssuche, d.h. um zu überprüfen, ob Teile eines Textes ohne eine entsprechende Quellenangabe einer anderen Veröffentlichung entnommen worden sind. Darüber hinaus gibt es Nutzungsmuster, die durch Anwendungen, die der Nutzer auf dem von ihm verwendeten Kommunikationsendgerät betreibt, ein so genanntes "Hintergrundrauschen" erzeugen, d.h. eine für den jeweiligen Nutzer nicht erkennbare und gegebenenfalls von diesem auch nicht gewünschte Datenübertragung. Beispiele hierfür sind etwa Programme zur IP (Internet Proto-col)-Telefonie oder Peer-to-Peer-Anwendungen.

Generell wird bei bekannten Verfahren anhand des festgestellten Nutzungsmusters eine Nutzung entweder als normal eingestuft, d.h. das Übermitteln der betreffenden paketorientierten Daten wird durch das Kommunikationssystem gestattet, oder aber als auffällig im Sinne einer abnormalen Nutzung eingestuft, woraufhin das Übermitteln entsprechender Daten üblicherweise blockiert wird.

Der vorliegenden Erfindung liegt die Aufgabe zugrunde, unter Berücksichtigung von Nutzungsmustern ein flexibles und nutzerfreundliches Verfahren zum Betreiben eines Kommunikationssystems und zum Übermitteln von paketorientierten Daten von und/oder zu einem Kommunikationsendgerät anzugeben.

Diese Aufgabe wird erfindungsgemäß gelöst durch ein Verfahren zum Betreiben eines Kommunikationssystems und zum Übermitteln von paketorientierten Daten von und/oder zu einem Kommunikationsendgerät mit den folgenden Schritten:
- Untersuchen der von dem Kommunikationsendgerät gesendeten und/oder für das Kommunikationsendgerät bestimmten Daten und Feststellen eines gegenüber einer üblichen Nutzung auffälligen Nutzungsmusters durch das Kommunikationssystem,
- Erzeugen eines Kosten-Signals, das eine Angabe zu den für das Kommunikationsendgerät durch das festgestellte Nutzungsmuster verursachten Gebühren enthält, durch das Kommunikationssystem,
- Senden einer Anfragenachricht mit dem Kosten-Signal von dem Kommunikationssystem an das Kommunikationsendgerät und
- Fortsetzen des Übermittelns der Daten durch das Kommunikationssystem, sofern seitens des Kommunikationsendgerätes ein Kosten-Bestätigungs-Signal erzeugt und in einer Antwortnachricht an das Kommunikationssystem übertragen wird.

Das erfindungsgemäße Verfahren bietet den Vorteil, dass es einem Kommunikationsendgerät beziehungsweise dessen Nutzer die Möglichkeit bietet, im Falle des Auftretens eines gegenüber einer üblichen Nutzung auffälligen Nutzungsmusters anhand eines an das Kommunikationsendgerät übersandten Kosten-Signals zu entscheiden, ob das Übermitteln der Daten fortgesetzt werden soll oder nicht. Sofern seitens des Kommunikationsendgerätes das Fortsetzen der Übermittlung der Daten gewünscht ist, sendet das Kommunikationsendgerät ein Kosten-Bestätigungs-Signal in einer Antwortnachricht an das Kommunikationssystem. Vorteilhafterweise wird das Kommunikationsendgerät beziehungsweise dessen Nutzer somit durch das Kosten-Signal über den Umfang der durch das auffällige Nutzungsmuster entstehenden Kosten informiert. Damit wird es ermöglicht, dass seitens des Kommunikationsendgerätes eine von diesem nicht gewünschte Datenübertragung gestoppt und somit auch die entsprechenden Kosten vermieden werden können.

Für den Betreiber des Kommunikationssystems bietet das erfindungsgemäße Verfahren den Vorteil, dass eine durch das Kommunikationsendgerät erfolgende, unübliche Nutzung der Übertragungsressourcen, die anhand eines gegenüber einer üblichen Nutzung auffälligen Nutzungsmusters erkannt worden ist, nicht grundsätzlich unterbunden werden muss. Stattdessen besteht seitens des Kommunikationssystems die Möglichkeit, mittels eines Kosten-Signals auf das unübliche Nutzungsmuster zu reagieren. In Antwort auf das Senden der Anfragenachricht mit dem Kosten-Signal an das Kommunikationsendgerät besteht für dieses die Möglichkeit, ungewollte Datenübertragungen zu beenden. Für den Fall jedoch, dass seitens des Kommunikationsendgerätes das auffällige Nutzungsmuster bewusst erzeugt wird und die mit diesem Nutzungsmuster verbundenen Gebühren akzeptiert werden, kann das Kommunikationsendgerät ein Kosten-Bestätigungs-Signal erzeugen und in der Antwortnachricht an das Kommunikationssystem übertragen. In diesem Fall liegt dem Netzbetreiber des Kommunikationssystems somit vorteilhafterweise ein ausdrückliches Einverständnis des Kommunikationsendgerätes beziehungsweise seines Nutzers mit den durch das auffällige Nutzungsmuster verursachten Gebühren vor. Dabei ist zu beachten, dass ein auffälliges Nutzungsmuster in der Regel mit vergleichsweise hohen Gebühren verbunden sein wird. So besteht seitens des Kommunikationssystems vorteilhafterweise die Möglichkeit, über die betreffenden Gebühren den Grad der Nutzung des Kommunikationssystems zum Übertragen von Daten, die ein auffälliges Nutzungsmuster aufweisen, zu steuern. So ist davon auszugehen, dass je höher die in dem Kosten-Signal enthaltene Gebührenangabe ist, desto seltener wird ein Kommunikationsendgerät das weitere Übermitteln von Daten durch das Senden einer ein Kosten-Bestätigungs-Signal enthaltenen Antwortnachricht bestätigen.

In einer bevorzugten Ausführungsform läuft das erfindungsgemäße Verfahren so ab, dass die Anfragenachricht eine Angabe zu der Art des durch das Kommunikationssystem festgestellten Nutzungsmusters enthält. Dies bietet für das Kommunikationsendgerät beziehungsweise den Nutzer des Kommunikationsendgerätes den Vorteil, dass die Entscheidung über das Erzeugen des Kosten-Bestätigungs-Signals in Abhängigkeit von dem festgestellten Nutzungsmuster erfolgen kann. Hierdurch wird die Transparenz der Nutzung des Kommunikationssystems und der mit dieser Nutzung verbundenen Vergebührung für den Nutzer des Kommunikationsendgerätes erheblich verbessert.

Die Entscheidung über das Fortsetzen des Übermittelns der Daten kann beispielsweise durch das Kommunikationsendgerät automatisch anhand von nutzerdefinierten Regeln erfolgen. In einer besonders bevorzugten Weiterbildung läuft das erfindungsgemäße Verfahren jedoch so ab, dass das Kosten-Signal durch das Kommunikationsendgerät zur Anzeige gebracht wird.
Dies bietet den Vorteil, dass der Nutzer des Kommunikationsendgerätes über das Kosten-Signal informiert wird und selbst über das Fortsetzen der Datenübertragung entscheiden kann.
Dies kann beispielsweise dadurch erfolgen, dass durch das Drücken einer Taste oder einer Tastenkombination auf dem Kommunikationsendgerät das Erzeugen des Kosten-Bestätigungs-Signals durch das Kommunikationsendgerät ausgelöst wird.

Vorzugsweise kann das erfindungsgemäße Verfahren auch so ablaufen, dass das Übermitteln von das auffällige Nutzungsmuster aufweisenden Daten durch das Kommunikationssystem blockiert wird, sofern seitens des Kommunikationsendgerätes anstelle des Kosten-Bestätigungs-Signals ein Kosten-Ablehnungs-Signals erzeugt und in der Antwortnachricht an das Kommunikationssystem übertragen wird. Dies bietet den Vorteil, dass aufgrund des Kosten-Ablehnungs-Signals ein ausdrückliches Einverständnis seitens des Kommunikationsendgerätes dafür vorliegt, dass das Übermitteln von das auffällige Nutzungsmuster aufweisenden Daten durch das Kommunikationssystem blockiert wird.

In einer weiteren bevorzugten Ausführungsform ist das erfindungsgemäße Verfahren derart ausgestaltet, dass dem Kommunikationsendgerät von ihm verwendete Übertragungsressourcen vollständig durch das Kommunikationssystem entzogen werden. Vorzugsweise wird dem Kommunikationssystem hierdurch in Antwort auf das Empfangen eines Kosten-Ablehnungs-Signals in der Antwortnachricht die Möglichkeit gegeben, das Übermitteln jeglicher Daten von und/oder zu dem Kommunikationsendgerät einzustellen.

In einer besonders bevorzugten Weiterbildung des erfindungs gemäßen Verfahrens wird als Kommunikationssystem ein Mobilfunknetz verwendet. Diese Ausführungsform des erfindungsgemäßen Verfahrens ist bevorzugt, da insbesondere bei der Übertragung großer Mengen paketorientierter Daten über ein Mobilfunknetz hohe Kosten anfallen können. Dies bedeutet, dass in diesem Fall eine Transparenz hinsichtlich der Kosten bzw. Gebühren sowohl für den Nutzer des Kommunikationsendgerätes als auch für den Betreiber des Kommunikationssystems von besonders großer Bedeutung ist.

Bei dem Mobilfunknetz kann es sich beispielsweise um ein Mobilfunknetz gemäß dem GSM (Global System for Mobile Communications)-, dem GPRS (General Packet Radio Service)-, dem EDGE (Enhanced Data Rates for GSM Evolution)- oder dem UMTS (Universal Mobile Telecommunications System)-Standard handeln.

Der Erfindung liegt darüber hinaus die Aufgabe zugrunde, eine Filter-Einrichtung eines Kommunikationssystems anzugeben, die unter Berücksichtigung von Nutzungsmustern ein flexibles und nutzerfreundliches Verfahren zum Übermitteln von paketorientierten Daten von und/oder zu einem Kommunikationsendgerät ermöglicht.

Diese Aufgabe wird erfindungsgemäß gelöst durch eine Filter-Einrichtung eines Kommunikationssystems mit Mitteln zum Untersuchen von einem Kommunikationsendgerät gesendeter und/oder für das Kommunikationsendgerät bestimmter paketorientierter Daten und zum Feststellen eines gegenüber einer üblichen Nutzung auffälligen Nutzungsmusters, Mitteln zum Erzeugen eines Kosten-Signals, das eine Angabe zu den für das Kommunikationsendgerät durch das festgestellte Nutzungsmuster verursachten Gebühren enthält, Mitteln zum Senden einer Anfragenachricht mit dem Kosten-Signal an das Kommunikationsendgerät, Mitteln zum Empfangen einer Antwortnachricht von dem Kommunikationsendgerät und Steuermitteln zum Auswerten der Antwortnachricht und zum Veranlassen des Fortsetzens des Übermittelns der Daten, sofern die von dem Kommunikationsendgerät empfangene Antwortnachricht ein Kosten-Bestätigungs-Signal enthält.

Die erfindungsgemäße Filter-Einrichtung bietet den Vorteil, dass sie Mittel zum Untersuchen der von einem Kommunikationsendgerät gesendeten und/oder für das Kommunikationsendgerät bestimmten paketorientierten Daten und zum Feststellen eines gegenüber einer üblichen Nutzung auffälligen Nutzungsmusters aufweist. Hierdurch wird es ermöglicht, dass die Mittel zum Erzeugen eines Kosten-Signals der Filter-Einrichtung ein Kosten-Signal erzeugen können, das eine Angabe zu den für das Kommunikationsendgerät durch das festgestellte Nutzungsmuster verursachten Gebühren enthält. Des Weiteren ist die Filter-Einrichtung zum Senden einer Anfragenachricht mit dem Kosten-Signal an das Kommunikationsendgerät und zum Empfangen einer Antwortnachricht von dem Kommunikationsendgerät ausgebildet.

Vorteilhafterweise verfügt die Filter-Einrichtung darüber hinaus über Steuermittel zum Auswerten der Antwortnachricht und zum Veranlassen des Fortsetzens des Übermittelns der Daten, sofern die von dem Kommunikationsendgerät empfangene Antwortnachricht ein Kosten-Bestätigungs-Signal enthält. Somit ermöglicht es die erfindungsgemäße Filter-Einrichtung dem Kommunikationsendgerät beziehungsweise seinem Nutzer, im Falle des Auftretens eines gegenüber einer üblichen Nutzung auffälligen Nutzungsmusters auf flexible Art und Weise zu entscheiden, ob das Übermitteln der Daten fortgesetzt werden soll oder nicht. Hierdurch wird der Nutzer des Kommunikationsendgerätes insbesondere vor dem Entstehen von Kosten geschützt, die möglicherweise durch Datenübertragungen verursacht werden, derer sich der Nutzer des Kommunikationsendge rätes überhaupt nicht bewusst ist.

Vorzugsweise ist die erfindungsgemäße Filter-Einrichtung so ausgestaltet, dass sie Mittel zum Versehen der Anfragenachricht mit einer Angabe zu der Art des festgestellten Nutzungsmusters aufweist. Entsprechend den Ausführungen im Zusammenhang mit der entsprechenden bevorzugten Weiterbildung des erfindungsgemäßen Verfahrens bietet dies den Vorteil, dass dem Kommunikationsendgerät beziehungsweise seinem Nutzer eine Information dazu übermittelt werden kann, in welcherlei Hinsicht im jeweiligen Fall aus Sicht der Filter-Einrichtung ein gegenüber einer üblichen Nutzung auffälliges Nutzungsmuster vorliegt.

Vorzugsweise kann die erfindungsgemäße Filter-Einrichtung auch so ausgeprägt sein, dass die Mittel zum Erzeugen des Kosten-Signals zum Empfangen des Kosten-Signals von einer Vergebührungseinrichtung des Kommunikationssystems ausgebildet sind. Dies ist vorteilhaft, da Kosten-Signale in Kommunikationssystemen üblicherweise von Vergebührungseinrichtungen erzeugt werden. Dies bedeutet, dass eine zusätzliche Verwaltung entsprechender Tarifpläne und Tariffunktionen in der Filter-Einrichtung nicht erforderlich ist.

Vorteilhafterweise kann die erfindungsgemäße Filter-Einrichtung so weitergebildet sein, dass die Steuermittel zum Blockieren von das auffällige Nutzungsmuster aufweisenden Daten ausgebildet sind, sofern die Antwortnachricht anstelle des Kosten-Bestätigungs-Signals ein Kosten-Ablehnungs-Signal enthält. Dies bietet den Vorteil, dass für den Fall, dass seitens des Kommunikationsendgerätes kein Einverständnis mit den mittels des Kosten-Signals signalisierten Gebühren besteht, von der Filter-Einrichtung das Beenden des Übermittelns der Daten veranlasst werden kann. Vorteilhafterweise werden Übertragungsressourcen des Kommunikationssystems somit nur für den Fall weiter durch Daten mit dem auffälligen Nutzungsmuster belastet, dass seitens des Kommunikationsendgerätes ein Kosten-Bestätigungs-Signal erzeugt wird.

In einer weiteren bevorzugten Ausführungsform weist die erfindungsgemäße Filter-Einrichtung Mittel zum vollständigen Entziehen der von dem Kommunikationsendgerät verwendeten Übertragungsressourcen auf. Somit können vorteilhafterweise nicht nur solche Daten, die das auffällige Nutzungsmuster aufweisen, sondern jegliche Daten hinsichtlich ihrer Übermittlung von und/oder zu dem Kommunikationsendgerät blockiert werden.

Die Erfindung betrifft weiterhin einen Netzknoten eines Kommunikationssystems zum Übermitteln von paketorientierten Daten.

Hinsichtlich des Netzknotens liegt der vorliegenden Erfindung die Aufgabe zugrunde, einen Netzknoten anzugeben, der das Übermitteln von Daten von und/oder zu einem Kommunikationsendgerät unter Berücksichtigung von Nutzungsmustern auf flexible und nutzerfreundliche Art und Weise unterstützt.

Diese Aufgabe wird erfindungsgemäß gelöst durch einen Netzknoten eines Kommunikationssystems zum Übermitteln von paketorientierten Daten von und/oder zu einem Kommunikationssystem mit einer Filter-Einrichtung nach einem der zuvor behandelten Ansprüche.

Die Vorteile des erfindungsgemäßen Netzknotens ergeben sich aus den im Zusammenhang mit der erfindungsgemäßen Filter-Einrichtung beziehungsweise den betreffenden bevorzugten Weiterbildungen der erfindungsgemäßen Filter-Einrichtung genannten Vorteilen. Vorzugsweise ist der erfindungsgemäße Netzknoten so ausgestaltet, dass er ein Netzknoten eines Mobilfunknetzes ist. Diese Ausführungsform ist bevorzugt, da insbesondere in Mobilfunknetzen, in denen aufgrund der verwendeten Funkübertragungsschnittstelle üblicherweise vergleichsweise hohe Kosten für das Übermitteln von Daten berechnet werden, eine hohe Transparenz der durch die Nutzung eines Dienstes beziehungsweise durch das Übermitteln von Daten anfallenden Gebühren für ein Kommunikationsendgerät beziehungsweise dessen Nutzer wünschenswert ist.

Die Erfindung betrifft weiterhin ein Kommunikationssystem zum Übermitteln von paketorientierten Daten von und/oder zu einem Kommunikationsendgerät.

Hinsichtlich des Kommunikationssystems liegt der vorliegenden Erfindung die Aufgabe zugrunde, ein Kommunikationssystem anzugeben, das das Übermitteln von paketorientierten Daten von und/oder zu einem Kommunikationsendgerät unter Berücksichtigung von Nutzungsmustern auf flexible und nutzerfreundliche Art und Weise ermöglicht.

Diese Aufgabe wird erfindungsgemäß gelöst durch ein Kommunikationssystem zum Übermitteln von paketorientierten Daten von und/oder zu einem Kommunikationsendgerät mit einer Filter-Einrichtung nach einem der oben behandelten Ansprüche und/oder einem Netzknoten nach einem der zuvor diskutierten Ansprüche.

Die Vorteile des erfindungsgemäßen Kommunikationssystems entsprechen den zuvor im Zusammenhang mit der erfindungsgemäßen Filter-Einrichtung sowie dem erfindungsgemäßen Netzknoten sowie seiner bevorzugten Weiterbildung genannten Vorteilen.

Zur weiteren Erläuterung der Erfindung zeigt die
- Figur: zur Erläuterung eines Ausführungsbeispiels des erfindungsgemäßen Verfahrens ein Ausführungsbeispiel des erfindungsgemäßen Kommunikationssystems mit einem Ausführungsbeispiel eines erfindungsgemäßen Netzknotens mit einem Ausführungsbeispiel einer erfindungsgemäßen Filter-Einrichtung.

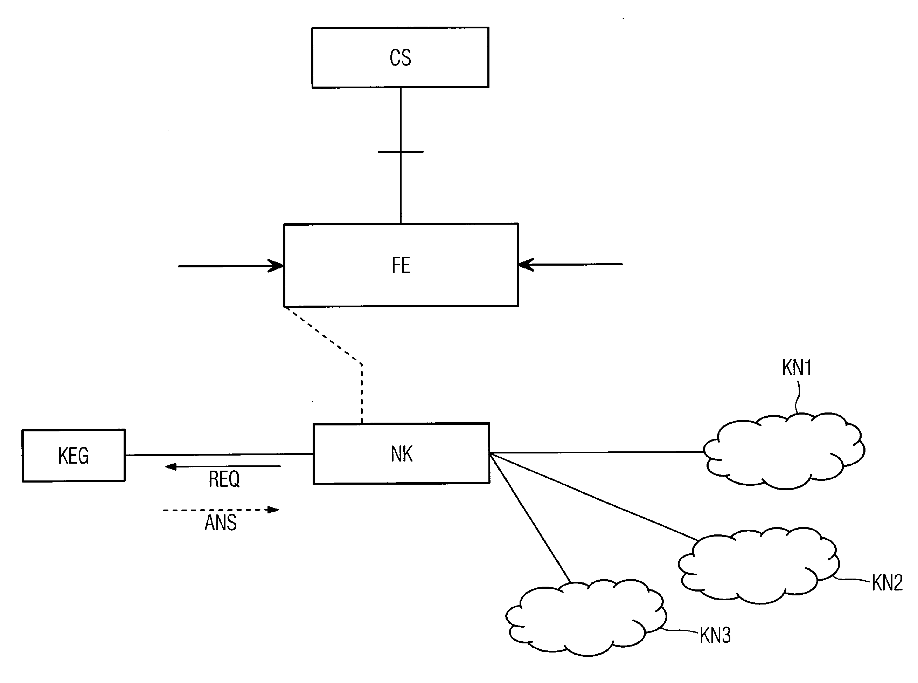

In der Figur ist ein Kommunikationsendgerät KEG dargestellt, das über einen Netzknoten NK, der Bestandteil eines Kommunikationssystems ist, Daten empfangen und senden kann. Zu diesem Zwecke besteht für das Kommunikationsendgerät KEG eine Verbindungsmöglichkeit zu externen Kommunikationsnetzen KN1, KN2 und KN3. Bei den Kommunikationsnetzen KN1, KN2 und KN3 kann es sich um beliebige Arten von Kommunikationsnetzen, wie beispielsweise das Internet, handeln.

Grundsätzlich kann es sich bei dem Netzknoten NK um einen Netzknoten NK eines beliebigen Fest- oder Mobilfunknetzes handeln. Sofern es sich bei dem Netzknoten NK um einen Netzknoten eines Mobilfunknetzes handelt, so kann er beispielsweise in Form eines so genannten GGSN (Gateway GPRS (General Packet Radio Service) Support Node) oder eines PDG (Packet Data Gateway) ausgebildet sein. Dabei besteht grundsätzlich die Möglichkeit, dass der betreffende Netzknoten NK bereits zu anderen Zwecken Filtermechanismen aufweist. Bei diesen Filtermechanismen kann es sich beispielsweise um solche zur Umsetzung der aus dem 3GPP (3rd Generation Partnership Project)-Standard bekannten Verfahren "Service Based Local Policy", "Flow-Based Charging" oder "Policy und Charging Control" (3GPP-Rel-ease 7) handeln.

Durch die gestrichelte Linie in der Figur ist angedeutet, dass auf dem Netzknoten NK eine Filter-Einrichtung FE angeordnet ist, die sowohl für das Kommunikationsendgerät KEG bestimmten Datenverkehr als auch von dem Kommunikationsendgerät KEG ausgehenden Datenverkehr überwacht. Dies ist in der Figur durch die von links bzw. rechts zur Filter-Einrichtung FE einlaufenden Pfeile angedeutet. Die Filter-Einrichtung FE kann unmittelbar auf dem Netzknoten NK integriert oder ihm über eine Schnittstelle zugeordnet sein. Darüber hinaus verfügt die Filter-Einrichtung FE über eine Schnittstelle zu einer Vergebührungseinrichtung CS sowie vorzugsweise über eine in der Figur nicht dargestellte weitere Schnittstelle zu der so genannten Bearer-Kontrolle des Netzknotens NK, auf der sie angeordnet ist.

Die Filter-Einrichtung FE führt in Echtzeit eine Überwachung desjenigen Nutzerdatenverkehrs durch, der den betreffenden Netzknoten NK passiert oder passieren möchte. Die Überwachung kann dabei vorzugsweise unter Berücksichtigung des jeweiligen Nutzers bzw. Kommunikationsendgerätes und des durch die übermittelten Daten erbrachten Dienstes, d.h. auf Nutzer- und Dienstbasis, unter Verwendung allgemein bekannter Algorithmen und Verfahren erfolgen. So sind entsprechende Verfahren, bei denen in der Regel die Schichten 2 bis 7 gemäß dem OSI (Open System Interconnection)-Referenzmodell untersucht werden, beispielsweise unter dem Begriff "Deep Packet Inspection" bekannt. Bei der Überwachung können weiterhin auch Vorgaben des Dienstanbieters berücksichtigt werden. Ziel ist es hierbei, abnormales Nutzerverhalten, d.h. gegenüber einer üblichen Nutzung auffällige Nutzungsmuster, zu erkennen. Dies kann beispielsweise derart geschehen, dass eine Abweichung des Nutzerverhaltens vom zuvor statistisch ermittelten Verhalten des Normalbenutzers in Bezug auf den speziellen, durch das Kommunikationsendgerät KEG genutzten Dienst, festgestellt wird. Darüber hinaus ist es auch möglich, dass ein Nutzungsmuster erkannt wird, das eine Abweichung des Nutzerverhaltens von dem, was der Betreiber des Kommunikationssystems oder der jeweilige Dienstanbieter für die jeweilige Ressourcennutzung als akzeptabel ansieht, festgestellt wird.

Wird nun anhand der Untersuchung der von dem Kommunikationsendgerät KEG gesendeten und/oder für das Kommunikationsendgerät KEG bestimmten Daten ein gegenüber einer üblichen Nutzung auffälliges Nutzungsmuster durch das Kommunikationssystem, d.h. im vorgegebenen Fall durch die Filter-Einrichtung FE des Netzknotens NK, festgestellt, so kontaktiert die Filter-Einrichtung FE zunächst die Vergebührungseinrichtung CS, um für den mit dem erkannten Verhalten verbundenen Ressourcenverbrauch eine Kosteninformation abzufragen. Basierend auf dieser von der Vergebührungseinrichtung CS empfangenen Kosteninformation erzeugt die Filter-Einrichtung FE ein Kosten-Signal, das eine Angabe zu den für das Kommunikationsendgerät KEG durch das festgestellte Nutzungsmuster verursachten Gebühren enthält.

Die Filter-Einrichtung FE beziehungsweise der Netzknoten NK sendet nun eine Anfragenachricht REQ mit dem Kosten-Signal an das Kommunikationsendgerät KEG. Vorteilhafterweise wird das Kommunikationsendgerät KEG beziehungsweise dessen Nutzer durch die Anfragenachricht weiterhin über die Art der abnormalen Situation, d.h. die Art des seitens des Kommunikationssystems festgestellten unüblichen Nutzungsmusters, informiert.

Das Kommunikationsendgerät KEG beziehungsweise dessen Nutzer hat nun die Möglichkeit, auf Basis des empfangenen Kosten-Signals zu entscheiden, ob unter Berücksichtigung der für das festgestellte Nutzungsmuster anfallenden Gebühren eine Fortsetzung der Dienstnutzung, d.h. ein Fortsetzen des Übermittelns der Daten gewünscht ist oder nicht. Sofern seitens des Kommunikationsendgerätes KEG ein Kosten-Bestätigungs-Signal erzeugt und in einer Antwortnachricht ANS an das Kommunikationssystem übertragen wird, wird das Übermitteln der Daten durch das Kommunikationssystem fortgesetzt und dem Kommunikationsendgerät KEG beziehungsweise dessen Nutzer entsprechend in Rechnung gestellt.

Lehnt das Kommunikationsendgerät KEG beziehungsweise dessen Nutzer das weitere Übermitteln von das auffällige Nutzungsmuster aufweisenden Daten dadurch ab, dass seitens des Kommunikationsendgerätes KEG anstelle des Kosten-Bestätigungs-Signals ein Kosten-Ablehnungs-Signal erzeugt und in der Antwortnachricht ANS an das Kommunikationssystem übertragen wird, so wird aller Nutzerdatenverkehr, der das gegenüber einer üblichen Nutzung auffällige Nutzungsmuster aufweist, durch die Filter-Einrichtung FE beziehungsweise den Netzknoten NK geblockt. Dabei kann die Filter-Einrichtung FE eine entsprechende Blockierung entweder selbst vornehmen, oder diese durch Interaktion mit der so genannten Bearer-Kontrolle des Netzknotens NK veranlassen. Im Ablehnungsfall kann dem Kommunikationsendgerät KEG darüber hinaus der Bearer, d.h. die Übertragungsressource, komplett entzogen werden. Dies kann beispielsweise beim Vorliegen einer so genannten "Denial-Of-Service"-Attacke, d.h. einem Nutzungsmuster, das auf einen solchen Angriff hindeutet, der Fall sein. Über den vollständigen Entzug der Übertragungsressourcen kann das Kommunikationsendgerät KEG beziehungsweise dessen Nutzer vorab separat informiert werden.

Für die Filter-Einrichtung FE können konzeptionell zwei Arten von Filterregeln unterschieden werden, die eine Benachrichtigung des Kommunikationsendgerätes KEG aufgrund eines gegenüber einer üblichen Nutzung auffälligen Nutzungsmusters zur Folge haben können. Zum einen kann es sich hierbei um Schutzfilter handeln, d.h. diese Filter schützen das Kommunikationsendgerät KEG beziehungsweise dessen Nutzer vor Kosten, die durch eigenes Nutzungsverhalten beziehungsweise durch ein durch bösartige oder fehlerhafte Hard- oder Software verursachtes unübliches Nutzungsverhalten verursacht werden. Zum anderen können als zweite Kategorie von Filterregeln Kostenfilter unterschieden werden, die sich entweder auf Nutzungsverhalten beziehen, die aus Sicht des Betreibers des Kommunikationssystems nicht gewünscht beziehungsweise tolerierbar sind, da sie beispielsweise sein Geschäftsmodell unterlaufen, oder im Rahmen einer korrekten Ausführung beziehungsweise Nutzung von Diensten zu für den Kunden, d.h. für den Nutzer des Kommunikationsendgerätes KEG, in ihre Höhe nicht vorhersehbaren Kosten führen.

Beide Arten von Filterregeln beziehungsweise Filtertypen wirken auch für an das Kommunikationsendgerät KEG gesendete Daten und schützen das Kommunikationsendgerät KEG somit vor Datenverkehr, der von dem Kommunikationsendgerät KEG beispielsweise aus einem der Kommunikationsnetze KN1, KN2 oder KN3 empfangen werden kann. Dies bedeutet, dass die Schutz- beziehungsweise Kostenfilter nicht nur auf die aktive Nutzung durch das Kommunikationsendgerät KEG, d.h. das Senden von Daten, wirken, sondern darüber hinaus auch auf das passive Empfangen von Daten. Dies kann beispielsweise im Falle des Verwendens einer so genannten Peer-to-Peer-Lösung durch das Kommunikationsendgerät KEG vorteilhaft sein. Hierbei kann die Situation auftreten, dass eine durch den Betreiber des Kommunikationssystems dynamisch vergebene IP (Internetprotokoll)-Adresse kurz zuvor noch von einem anderen Kommunikationsendgerät verwendet worden ist. Dies kann dazu führen, dass eigentlich für das andere Kommunikationsendgerät vorgesehene Daten fälschlicherweise von dem neu an dem Kommunikationssystem angemeldeten Kommunikationsendgerät KEG empfangen werden. Insbesondere wenn es sich hierbei um eine größere Datenmenge handelt ist es in dieser Situation für das Kommunikationsendgerät KEG bzw. dessen Nutzer wünschenswert, durch die Anfragenachricht REQ und das in ihr enthaltene Kosten-Signal über die ungewünschte Situation informiert zu werden.

Unabhängig von der Art des zum Untersuchen der von dem Kommunikationsendgerät KEG gesendeten und/oder für das Kommunikationsendgerät KEG bestimmten Daten verwendeten Filtertyps führt ein abnormales Verhalten, d.h. das Feststellen eines gegenüber einer üblichen Nutzung auffälligen Nutzungsmusters durch die Filter-Einrichtung FE, dazu, dass nach dem Erzeugen eines Kosten-Signals, das eine Angabe zu dem für das Kommunikationsendgerät KEG durch das festgestellte Nutzungsmuster verursachten Gebühren enthält, eine Anfragenachricht REQ mit dem Kosten-Signal von dem Kommunikationssystem, d.h. im beschriebenen Ausführungsbeispiel von der Filter-Einrichtung FE beziehungsweise dem Netzknoten NK, an das Kommunikationsendgerät KEG übermittelt wird. Dabei enthält die Anfragenachricht REQ vorzugsweise einen Hinweis bezüglich des Grundes der Benachrichtigung. Das Kommunikationsendgerät KEG beziehungsweise dessen Nutzer wird somit zu einer Entscheidung aufgefordert, ob die Bereitschaft besteht, die Kosten zu tragen, d.h. ob das aus Sicht des Kommunikationssystems abnormale Verhalten fortgesetzt werden soll oder nicht. Dabei ist der Dialog mit dem Nutzer, d.h. die Anfragenachricht REQ und die Antwortnachricht ANS, vorzugsweise durch entsprechende Verfahren gegen eine Manipulation durch Schadsoftware abgesichert. Dies kann beispielsweise durch eine entsprechende Verschlüsselung und/oder elektronische Signatur der Nachrichten geschehen.

Das Übermitteln der Daten, die das gegenüber einer üblichen Nutzung auffällige Nutzungsmuster aufweisen, kann in dem Zeitraum, während dessen das Kommunikationssystem auf die Antwortnachricht ANS des Kommunikationsendgerätes KEG wartet, entweder unterbrochen oder fortgesetzt werden.

Die zuvor beschriebene Vorgehensweise ermöglicht Betreibern von Kommunikationssystemen und Dienstanbieter vorteilhafterweise neue Abrechnungsmodelle. Diese ermöglichen es, auf flexible und nutzerfreundliche Art und Weise eine neue Art von Gebühren zu erheben.

Darüber hinaus wird in so genannten "False-Positive-Fällen", d.h. für den Fall, dass seitens des Kommunikationssystems fälschlicherweise ein gegenüber einer üblichen Nutzung auffälliges Nutzungsmuster festgestellt wird beziehungsweise dieses auffällige Nutzungsmuster durch das Kommunikationsendgerät KEG beziehungsweise dessen Nutzer ausdrücklich gewünscht ist, das Übermitteln der paketorientierten Daten nicht in jedem Fall unterbunden. Stattdessen wird an das Kommunikationsendgerät KEG eine Gebührenanzeige gesendet, die eine Angabe zu den für das Kommunikationsendgerät KEG durch das festgestellte Nutzungsmuster verursachten Gebühren enthält. Basierend auf dieser Gebührenanzeige kann nun vorteilhafterweise durch das Kommunikationsendgerät KEG beziehungsweise dessen Nutzer entschieden werden, ob das Übermitteln der Daten fortgesetzt werden soll oder nicht.

Des Weiteren bietet das beschriebene Verfahren den Vorteil, dass das Kommunikationsendgerät KEG vor fälschlich oder bösartig aus dem Netz versendeten hochvolumigen Daten sowie den durch solche Daten verursachten Kosten geschützt wird. Dies ist auch für die jeweiligen Dienstanbieter vorteilhaft, da die Kundenzufriedenheit gesteigert werden kann sowie Übertragungsressourcen ausschließlich für durch das Kommunikationsendgerät KEG beziehungsweise dessen Nutzer tatsächlich gewünschte Datenübertragungen bereitgestellt werden müssen.

Es sei darauf hingewiesen, dass die Filter-Einrichtung FE beziehungsweise der Netzknoten NK in der Regel selbstverständlich derart ausgebildet sind, dass sie gleichzeitig von einer Vielzahl von Kommunikationsendgeräten gesendete und/oder für diese Kommunikationsendgeräte bestimmte Daten untersuchen können.

## Patentansprüche

1. Verfahren zum Betreiben eines Kommunikationssystems und zum Übermitteln von paketorientierten Daten von und/oder zu einem Kommunikationsendgerät (KEG) mit den folgenden Schritten:
- Untersuchen der von dem Kommunikationsendgerät (KEG) gesendeten und/oder für das Kommunikationsendgerät (KEG) bestimmten Daten und Feststellen eines gegenüber einer üblichen Nutzung auffälligen Nutzungsmusters durch das Kommunikationssystem,
- Erzeugen eines Kosten-Signals, das eine Angabe zu den für das Kommunikationsendgerät (KEG) durch das festgestellte Nutzungsmuster verursachten Gebühren enthält, durch das Kommunikationssystem,
- Senden einer Anfragenachricht (REQ) mit dem Kosten-Signal von dem Kommunikationssystem an das Kommunikationsendgerät (KEG) und
- Fortsetzen des Übermittelns der Daten durch das Kommunikationssystem, sofern seitens des Kommunikationsendgerätes (KEG) ein Kosten-Bestätigungs-Signal erzeugt und in einer Antwortnachricht (ANS) an das Kommunikationssystem übertragen wird.

2. Verfahren nach Anspruch 1,
**dadurch gekennzeichnet, dass**
die Anfragenachricht (REQ) eine Angabe zu der Art des durch das Kommunikationssystem festgestellten Nutzungsmusters enthält.

3. Verfahren nach Anspruch 1 oder 2,
**dadurch gekennzeichnet, dass**
das Kosten-Signal durch das Kommunikationsendgerät (KEG) zur Anzeige gebracht wird.

4. Verfahren nach einem der vorangehenden Ansprüche,
**dadurch gekennzeichnet, dass**
das Übermitteln von das auffällige Nutzungsmuster aufweisenden Daten durch das Kommunikationssystem blockiert wird, sofern seitens des Kommunikationsendgerätes (KEG) anstelle des Kosten-Bestätigungs-Signals ein Kosten-Ablehnungs-Signals erzeugt und in der Antwortnachricht (ANS) an das Kommunikationssystem übertragen wird.

5. Verfahren nach Anspruch 4,
**dadurch gekennzeichnet, dass**
dem Kommunikationsendgerät (KEG) von ihm verwendete Übertragungsressourcen vollständig durch das Kommunikationssystem entzogen werden.

6. Verfahren nach einem der vorangehenden Ansprüche,
**dadurch gekennzeichnet, dass**
als Kommunikationssystem ein Mobilfunknetz verwendet wird.

7. Filter-Einrichtung (FE) eines Kommunikationssystems mit
- Mitteln zum Untersuchen von einem Kommunikationsendgerät (KEG) gesendeter und/oder für das Kommunikationsendgerät (KEG) bestimmter paketorientierter Daten und zum Feststellen eines gegenüber einer üblichen Nutzung auffälligen Nutzungsmusters,
- Mitteln zum Erzeugen eines Kosten-Signals, das eine Angabe zu den für das Kommunikationsendgerät (KEG) durch das festgestellte Nutzungsmuster verursachten Gebühren enthält,
- Mitteln zum Senden einer Anfragenachricht (REQ) mit dem Kosten-Signal an das Kommunikationsendgerät (KEG),
- Mitteln zum Empfangen einer Antwortnachricht (ANS) von dem Kommunikationsendgerät (KEG) und
- Steuermitteln zum Auswerten der Antwortnachricht (ANS) und zum Veranlassen des Fortsetzens des Übermittelns der Daten, sofern die von dem Kommunikationsendgerät (KEG) empfangene Antwortnachricht (ANS) ein Kosten-Bestätigungs-Signal enthält.

8. Filter-Einrichtung nach Anspruch 7,
**dadurch gekennzeichnet, dass**
sie Mittel zum Versehen der Anfragenachricht (REQ) mit einer Angabe zu der Art des festgestellten Nutzungsmusters aufweist.

9. Filter-Einrichtung nach einem der Ansprüche 7 oder 8,
**dadurch gekennzeichnet, dass**
die Mittel zum Erzeugen des Kosten-Signals zum Empfangen des Kosten-Signals von einer Vergebührungseinrichtung (CS) des Kommunikationssystems ausgebildet sind.

10. Filter-Einrichtung nach einem der Ansprüche 7 bis 9,
**dadurch gekennzeichnet, dass**
die Steuermittel zum Blockieren von das auffällige Nutzungsmuster aufweisenden Daten ausgebildet sind, sofern die Antwortnachricht (ANS) anstelle des Kosten-Bestätigungs-Signals ein Kosten-Ablehnungs-Signal enthält.

11. Filter-Einrichtung nach einem der Ansprüche 7 bis 10,
**dadurch gekennzeichnet, dass**
sie Mittel zum vollständigen Entziehen der von dem Kommunikationsendgerät (KEG) verwendeten Übertragungsressourcen aufweist.

12. Netzknoten (NK) eines Kommunikationssystems zum Übermitteln von paketorientierten Daten von und/oder zu einem Kommunikationsendgerät (KEG) mit einer Filter-Einrichtung (FE) nach einem der Ansprüche 7 bis 11.

13. Netzknoten nach Anspruch 12,
**dadurch gekennzeichnet, dass**
er ein Netzknoten eines Mobilfunknetzes ist.

14. Kommunikationssystem zum Übermitteln von paketorientierten Daten von und/oder zu einem Kommunikationsendgerät (KEG) mit einer Filter-Einrichtung (FE) nach einem der Ansprüche 7 bis 11 und/oder einem Netzknoten (NK) nach einem der Ansprüche 12 oder 13.
